# EUROPÄISCHE PATENTANMELDUNG

(11) **EP 1 052 748 A1**
(43) Veröffentlichungstag der Anmeldung: **15.11.2000**
(21) Anmeldenummer: 00810341.8
(22) Anmeldetag: 19.04.2000
(51) Int. Cl.: H02B 1/044, H02B 1/048

(54) **Bedienungselement zum Befestigen an einer Frontplatte**

(30) Priorität: 12.05.1999 CH 91399
(71) Anmelder: TH Contact AG, 4153 Reinach (CH)
(72) Erfinder: Campana, Urs, 4222 Zwingen (CH)
(74) Vertreter: Eder, Carl E.

(57) **Zusammenfassung**

Das erfindungsgemässe Bedienungselement, das beispielsweise als Taster oder als Anzeigeelement ausgebildet sein kann, ist dazu bestimmt, an einer Frontplatte (2) mit mindestens einer kreisförmigen Öffnung befestigt zu werden. Es weist ein Gehäuse (1) mit einem im Wesentlichen zylindrischen Abschnitt (11) und an seiner Vorderseite (1a) einen radial nach aussen und über den zylindrischen Abschnitt (11) hinausragenden Kragen (12) auf. Der zylindrische Abschnitt (11) ist mit mindestens einer ringsherumlaufenden Rille (13) versehen, in der ein Ring (8) aus einem elastisch deformierbaren Material sitzt. Wenn das Bedienungselement in der Frontplatte (2) eingesetzt ist, wird es durch das Anstehen einer Auflagefläche (12a) des Kragens an der Frontplatte (2) einerseits und durch das Andrücken des Ringes (8) an eine Seitenfläche der Rille (13) durch die Unterkante (2a) der Öffnung andererseits in der Öffnung fixiert.

## Beschreibung

Die Erfindung betrifft ein Bedienungselement gemäss dem Oberbegriff des Anspruchs 1.

Gebräuchliche Bedienungsfelder mit Bedienungselementen, beispielsweise mit Tastern oder Anzeigeelementen bei Haustürklingeln, Verkehrsmitteln, Aufzügen etc., sehen vor, dass ein oder mehrere Bedienungselemente an einer Frontplatte befestigt bzw. in diese eingebracht sind und diese ihrerseits am gewünschten Ort befestigt werden kann. Bei der Installation solcher Bedienungsfelder werden in einem ersten Schritt die Bedienungselemente an der Frontplatte befestigt, was beispielsweise durch eine Schraubenmutter geschehen kann, die auf ein am Bedienungselement angebrachtes Gewinde geschraubt wird. Anschliessend wird die Frontplatte als Ganzes befestigt. So ein Vorgehen bedingt jedoch natürlich, dass die Frontplatte als separates Werkstück vorgefertigt wird. Auch die Installation kann je nach Verkabelung der Bedienungselemente und je nach Zugänglichkeit des Bedienungsfeldes umständlich und mühsam sein. Ausserdem muss die Frontplatte als Ganzes abgelöst werden, wenn ein Bedienungselement defekt ist.

Es wäre daher wünschenswert, ein Bedienungselement direkt an einer schon installierten Frontplatte befestigen zu können. Eine solche Frontplatte müsste dann auch nicht ein separates, vorgefertigtes Werkstück sein. Als Frontplatte könnten durchaus auch direkt die mit geeigneten Öffnungen versehene Verschalung, das Gehäuse oder dergleichen des Gegenstandes dienen, an dem das Bedienungsfeld angebracht werden soll. Auf diese Weise würden natürlich sowohl massiv Kosten gespart bei der Herstellung des Bedienungsfeldes als auch bei seiner Installation. Ein schon bekanntes Mittel, das Befestigen eines Bedienungselementes an einer schon ortsfest installierten Frontplatte zu ermöglichen besteht darin, dass die Frontplatte mit zusätzlichen Bohrungen versehen wird, in die beispielsweise mit Sägezahnprofilen versehene und am Bedienungselement angebrachte Kunststoffarme eingebracht werden können, die dann das Bedienungselement an der Frontplatte fixieren. Eine andere Lösung ist aus den beiden US-Patentschriften 4 070 559 und 4 016 359 bekannt. Diese beiden Publikationen offenbaren je ein Bedienungselement, das beispielsweise als Schalter oder Hebel bzw. als elektrischer Isolator ausgebildet sein kann, und an einer Frontplatte mit einer kreisförmigen Öffnung befestigbar ist. Das Bedienungselement weist in diesen bekannten Fällen ein Gehäuse mit einem zylindrischen Abschnitt und einer den zylindrischen Abschnitt umlaufenden Ringnut auf. Der zylindrische Abschnitt ist dabei so bemessen, dass er praktisch ohne Spiel in die kreisförmige Öffnung passt. Diese bekannten Bedienungselemente besitzen des weiteren je eine in die Ringnut passende, ringförmige Spiralfeder, welche dazu dient, das Bedienungselement ohne zusätzliche Befestigungsmittel, also schnappverschlussartig, an der Frontplatte zu befestigen. Beim Einsetzen des Bedienungselementes in die genannte Frontplatte wird die Spiralfeder in die Ringnut gepresst. Sie entspannt sich im eingesetzten Zustand wieder und steht dann an der Innenseite der Frontplatte an, wodurch das Bedienungselement in der Öffnung fixiert wird. Diese bekannte Befestigungsart hat den Nachteil, dass der zylindrische Abschnitt so exakt dimensioniert sein muss, dass er satt passend, also nicht spielfrei, in die Öffnung der Frontplatte eingesetzt werden kann und dass das Bedienungselement aufgrund der speziell für diesen Zweck anzufertigenden Spiralfeder verhältnismässig kostspielig ist.

Der vorliegenden Erfindung liegt nun die Aufgabe zu Grunde, ein Bedienungselement zur Verfügung zu stellen, das in einfacher Weise an einer Frontplatte befestigt werden kann und das kostengünstig in der Herstellung ist.

Diese Aufgabe wird gelöst durch ein Bedienungselement mit den kennzeichnenden Merkmalen des Anspruchs 1.

Vorteilhafte Ausgestaltungen der Erfindung gehen aus den abhängigen Ansprüchen hervor.

Die vorliegende Erfindung weist im Vergleich zum Stand der Technik wesentliche Vorteile auf. So ergibt sie den Vorteil, dass das Gehäuse des Bedienungselementes sehr einfach und kostengünstig hergestellt werden kann. Beispielsweise wenn es metallisch ist, kann es durch Drehen in einem einzigen Arbeitsgang produziert werden. Auch die Installation eines mit erfindungsgemässen Bedienungselementen versehenen Bedienungsfeldes ist sehr einfach, die Bedienungselemente müssen lediglich mit den notwendigen elektrischen Anschlüssen versehen und anschliessend in die für sie vorgesehene Öffnung durch Drücken eingesetzt werden. Dadurch wird beispielsweise die Installation an schlecht zugänglichen Orten vereinfacht und speziell auch dann ermöglicht bzw. vereinfacht, wenn die Rückseite des Bedienungsfeldes nicht oder kaum zugänglich ist. Das erfindungsgemässe Bedienungselement ermöglicht aber insbesondere auch, dass die Frontplatte kein eigens angefertigtes Zwischenstück sein muss. Sie kann durchaus durch die Verschalung, das Gehäuse oder dergleichen des Gegenstandes gebildet werden, an dem das Bedienungsfeld angebracht werden soll. So kann je nach dem das Anfertigen eines mit erfindungsgemässen Bedienungselementen versehenen Bedienungsfeldes einfach darin bestehen, dass mindestens eine runde Öffnung in einer Standardgrösse in eine beispielsweise durch ein Blech gebildete Verschalung gebohrt wird und dann das Bedienungselement mit einem Handgriff befestigt wird. Dieses Vorgehen stellt im Vergleich zum gebräuchlichen Stand der Technik natürlich eine wesentliche Vereinfachung dar und ist dadurch mit erheblichen Kosteneinsparungen verbunden.

Im Folgenden wird anhand einer Zeichnung ein Ausführungsbeispiel des erfindungsgemässen Bedienungselementes beschrieben. Im gezeichneten und beschriebenen Beispiel ist das Bedienungselement als Taster ausgebildet. In der Zeichnung zeigt
die Figur 1 eine Seitenansicht des Bedienungselementes, dessen Ring geschnitten gezeichnet ist und das in die ebenfalls geschnitten gezeichnete Frontplatte eines Bedienungsfeldes eingesetzt ist,
die Figur 2 eine Ansicht dieses Bedienungselementes von der Hinterseite, wobei die elektrischen Anschlüsse nicht gezeichnet sind und
die Figur 3 einen vergrösserten Ausschnitt aus der in der Figur 1 gezeichneten Ansicht.

Das als Taster ausgebildete Bedienungselement weist ein Gehäuse 1 mit einer Vorderseite la und einer Hinterseite 1b auf. Es ist in eine kreisförmige Öffnung mit einem Durchmesser *d*_{*O*} in der Frontplatte 2 eines Bedienungsfeldes eingesetzt, die beispielsweise Teil der Verschalung des Gegenstandes ist, an dem das Bedienungsfeld angebracht ist. Im gezeichneten Beispiel beträgt die Dicke der Frontplatte in der Umgebung des Bedienungselementes *t*=2 mm. Im Innern des Gehäuses 1 befindet sich ein in der Zeichnung nicht dargestelltes Taster-Betätigungsglied. Dieses ist von der Vorderseite 1a des Gehäuses her betätigbar und verfügt über einen an sich bekannten Betätigungsmechanismus, es kann beispielsweise als berührungsempfindlicher Sensor oder aber auch als mechanisch betätigbarer elektrischer Schalter ausgebildet sein. Das Betätigungsglied kann elektrische Schaltimpulse durch hier schematisch dargestellte Zuleitungsdrähte 5 an ein zu steuerndes Gerät weitergeben.

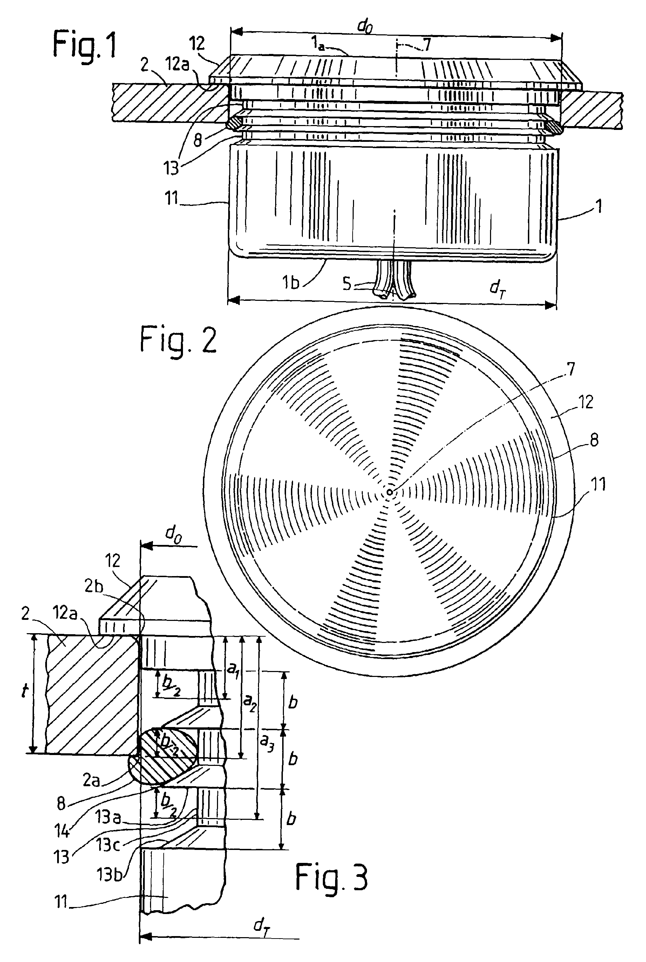

Das Gehäuse 1 besitzt einen im Wesentlichen zylindrischen Abschnitt 11 mit einer Achse 7 und einem Durchmesser *d*_{*T*}*,* der nur wenig kleiner als *d*_{*O*} und so bemessen ist, dass der zylindrische Abschnitt 11 durch die Öffnung mit dem Durchmesser *d*_{O} eingeschoben werden kann, zum Beispiel ist *d*_{*T*} um 0,3 mm kleiner als *d*_{*O*}*.* An der Vorderseite des Gehäuses 1a schliesst an den zylindrischen Abschnitt 11 ein radial wegragender Kragen 12 an. Dieser Kragen 12 weist eine zur Zylindermantelfläche rechtwinklige Auflagefläche 12a auf, die dazu bestimmt ist, auf der Frontplatte 2 aufzuliegen. Im gezeichneten Beispiel ist der Kragen 12 rotationssymmetrisch bezüglich der Achse 7, er kann aber ohne weiteres auch anders, beispielsweise rechteckig, ausgeformt sein. Weiter besitzt das Gehäuse 1 im zylindrischen Abschnitt 11 im in der Zeichnung dargestellten Beispiel drei ringsherum laufende Rillen 13, die je in einer zur Zylinderachse 7 senkrechten Ebene verlaufen. Die an ihrer breitesten Stelle gemessene Breite *b* einer jeden Rille ist beispielsweise 1 mm und ihre Tiefe beträgt zum Beispiel 0.6 mm. In der Figur 3 sind die parallel zur Zylinderachse 7 gemessenen Abstände der Rillen zur Auflagefläche 12a mit *a*_{*1*}*, a*_{*2*}*,* und *a*_{*3*}*,* bezeichnet, sie betragen beispielsweise *a*_{*1*}=1,2 mm, *a*_{*2*}=2,2 mm und *a*_{*3*}=3,2 mm. Die Rillen sind nun vorzugsweise so ausgeformt, dass sie in einem Längsschnitt durch den Zylinder, wie er beispielsweise in der Figur 3 dargestellt ist, zwei einander abgewandte Seitenflächen 13a und 13b sowie eine die Seitenflächen 13a, 13b miteinander verbindende Übergangsfläche 13c aufweisen. Dabei ist die der Vorderseite la des Bedienungselementes zugewandte Seitenfläche 13a rechtwinklig zur Zylinderachse 7, die der Hinterseite 1b zugewandte Seitenfläche 13b hingegen bildet mit Zylinderachse 7 einen Winkel von beispielsweise 40° bis 80°. Dadurch, dass die Rillen im gezeichneten Ausführungsbeispiel einen Abstand voneinander aufweisen, der ihrer Breite entspricht, gehen die hintere 13b bzw. vordere 13a Seitenfläche von einander benachbarten Rillen 13 ineinander über, wobei zwischen ihnen eine Kante 14 gebildet wird, so dass sich im Längsschnitt durch den Zylinder ein Sägezahnprofil ergibt.

In einer der Rillen, im gezeichneten Beispiel in der mittleren Rille, sitzt ein an sich torusförmiger Ring 8 aus einem elastisch deformierbaren Kunststoff, zum Beispiel aus synthetischem Gummi oder aus Silikon. Bei diesem Ring 8 kann es sich ohne weiteres um einen kommerziell erhältlichen Dichtungsring in einer Standardgrösse handeln. Der Durchmesser der Kreisscheibe, die entsteht, wenn man den Ring 8 an einer beliebigen Stelle entlang einer Fläche durch die Torusachse schneidet, ist dabei ungefähr gleich der Breite der Rille. Wenn das Bedienungselement nun in die Frontplatte 2 eingesetzt ist, so drückt die Unterkante 2a der kreisförmigen Öffnung in der Frontplatte 2 auf den Ring 8 und deformiert ihn. Dadurch, dass der Ring dabei an der Seitenfläche 13b ansteht und einem Druck von dieser Kante 2a nicht ausweichen kann, verhindert er, dass das Bedienungselement in den Figuren 1 und 3 nach oben weg- und aus der Öffnung in der Frontplatte 2 herausgezogen werden kann. Auf diese Weise ist das Bedienungselement durch das Anstehen der Auflagefläche 12a an der Frontplatte 2 einerseits und das erwähnte Anstehen des Ringes 8 an der Unterkante 2a andererseits fest in der Öffnung fixiert.

Die Abstände der Mitte der Rillen 13 von der Auflagefläche 12a sind so gewählt, dass sie um weniger als eine halbe Rillenbreite *b* grösser oder eventuell kleiner sind als die Dicken der üblicherweise verwendeten Frontplatten. Wenn es schon von vornherein klar ist, in was für eine Frontplatte das Bedienungselement eingesetzt werden soll, wenn also beispielsweise Bedienungselement und Frontplatte durch ein einheitliches Design oder auf andere Art eine Einheit bilden, so genügt es selbstverständlich, nur eine einzige Rille 13 am zylindrischen Abschnitt 11 des Gehäuses 1 anzubringen.

Durch die erfindungsgemässe Konstruktion ist das Befestigen eines Bedienungselementes an einer Frontplatte sehr einfach. In einem ersten Schritt muss das Bedienungselement mit den notwendigen elektrischen Anschlüssen versehen werden. Anschliessend wird es durch einen Druck auf Vorderseite la in die Öffnung in der Frontplatte 2 eingedrückt, wobei der Ring 8 in diejenige Rille 13 eingesetzt ist, deren Abstand von der Auflagefläche 12a nur um wenig grösser oder eventuell kleiner ist als die Dicke t der Frontplatte. Durch eine Phase 2b an der Oberkante der Öffnung in der Frontplatte 2 wird ermöglicht, dass der Ring 8 beim Einsetzen des Bedienungselementes ausweichen kann, wodurch dieses Einsetzen mit verhältnismässig geringem Druck bewerkstelligt werden kann. Befindet sich das Bedienungselement aber einmal in der dafür vorgesehenen Öffnung, so ist es fest fixiert und kann nur mit erheblichem Kraftaufwand und möglicherweise unter Zerstörung des Ringes 8 wieder entfernt werden. Besonders gross ist der Unterschied im Kraftaufwand zwischen dem Einsetzen des Bedienungselementes in die Öffnung und dem daraus Entfernen dann, wenn der die Rille 13 die vorstehend beschriebene spezielle Ausformung mit den zwei asymmetrischen Seitenflächen 13a und 13b aufweist, da der Ring einer an ihm ansetzenden Kraft nur in Richtung Gehäuse-Vorderseite 1a, nicht aber in Richtung Gehäuse-Hinterseite 1b ausweichen kann.

An dieser Stelle sei noch erwähnt, dass das vorstehend beschriebene Bedienungselement keinesfalls das einzig mögliche Ausführungsbeispiel für die Erfindung darstellt, sondern noch in vielfacher Hinsicht abgeändert werden kann. So ist es beispielsweise ohne weiteres möglich, die Grössen der Rillen 13 und des Ringes 8 ganz anders zu dimensionieren als vorstehend vorgeschlagen, zum Beispiel können beide ohne weiteres auch doppelt so gross sein wie im vorstehend beschriebenen Ausführungsbeispiel.

Natürlich ist es auch keinesfalls notwendig, dass das erfindungsgemässe Bedienungselement als Taster ausgebildet ist. Es kann beispielsweise ebensogut ein Anzeigeelement sein oder noch eine andere Funktion besitzen.

Auch die Frontplatte kann anders ausgebildet sein als im gezeichneten Beispiel dargestellt. So muss sie natürlich nicht notwendigerweise ein Teil der Verschalung oder des Gehäuses des Gegenstandes sein, an dem das Bedienungsfeld befestigt werden soll, sondern kann wie bei gebräuchlichen Bedienungsfeldern ein beispielsweise anschraubbares Zwischenstück sein. Auch kann sie beispielsweise so gefertigt sein, dass sie in der Umgebung der Öffnung noch eine Ansenkung mit den Abmessungen des Kragens 12 aufweist, so dass das Bedienungselement versenkt ist und seine Oberfläche beispielsweise bündig an die Oberfläche der Frontplatte anschliesst.

## Patentansprüche

1. Zum Befestigen an einer Frontplatte (2) mit mindestens einer kreisförmigen Öffnung mit Durchmesser *d*_{*O*} und einer in der Umgebung dieser Öffnung konstanten Dicke t bestimmtes Bedienungselement mit einem Gehäuse (1), das eine Vorderseite (1a), eine Hinterseite (1b) und einen dazwischen liegenden, im Wesentlichen zylindrischen Abschnitt (11) mit einem Durchmesser *d*_{*T*} aufweist, wobei *d*_{*T*} ein wenig kleiner ist als *d*_{*O*}*,* wobei das Gehäuse (1) an der Vorderseite (1a) einen seitlich über den zylindrischen Abschnitt (11) hinaus- und radial wegragenden Kragen (12) mit einer zur Zylinderfläche einen Winkel von 90° bildenden Auflagefläche (12a) zum Aufliegen auf der Frontplatte (2) aufweist, dadurch gekennzeichnet, dass der zylindrische Abschnitt mindestens eine in einer zur Zylinderachse (7) senkrechten Ebene ringsherum verlaufende Rille (13) mit einer an ihrer breitesten Stelle gemessenen Breite *b* aufweist, wobei für den parallel zur Zylinderachse (7) gemessenen Abstand *a* der Mitte einer Rille (13) von der Auflagefläche (12a) gilt, dass *t-b*/2 < *a* < *t*+*b*/2, dass in der Rille (13) ein Ring (8) aus einem elastisch deformierbaren Material sitzt, dessen Aussendurchmesser grösser als *d*_{*O*} ist, und dass der Ring (8) so bemessen und angeordnet ist, dass im in die Frontplatte (2) eingesetzten Zustand durch das Andrücken des Ringes (8) an eine Seitenfläche der Rille (13) durch die Unterkante (2a) der Öffnung das Bedienungselement in der Öffnung fixiert wird.

2. Bedienungselement nach Anspruch 1, dadurch gekennzeichnet, dass mindestens eine Rille (13) in einem Längsschnitt durch eine durch die Zylinderachse (7) verlaufende Ebene zwei einander abgewandte Seitenflächen (13a, 13b) und eine die Seitenflächen (13a, 13b) stetig miteinander verbindende Übergangsfläche (13c) aufweist, dass die der Gehäuse-Vorderseite (1a) zugewandte Seitenfläche (13a) rechtwinklig zur Zylinderachse (7) ist und die der Gehäuse-Hinterseite (1b) zugewandte Seitenfläche (13b) mit der Zylinderachse (7) einen Winkel von 40° bis 80° bildet und so geneigt ist, dass die Rillenbreite mit zunehmender Tiefe abnimmt.

3. Bedienungselement nach Anspruch 1 oder 2 , dadurch gekennzeichnet, dass die senkrecht zur Zylinderachse (7) gemessene Tiefe jeder Rille (13) zwischen 45% und 100% ihrer an ihrer breitesten Stelle gemessenen Breite beträgt.

4. Bedienungselement nach einem der Ansprüche 1 bis 3, dadurch gekennzeichnet, dass es mindestens zwei Rillen (13) mit Breite *b* und parallel zur Zylinderachse (7) gemessenen Abständen *a*_{*1*} und *a*_{*2*} zur Auflagefläche aufweist, so dass es wahlweise an einer Frontplatte mit Dicke *t*_{*1*} mit *a*_{*1*}*-b/*2 *< t*_{*1*} *< a*_{*1*}+*b/*2 oder an einer Frontplatte mit Dicke *t*₂ mit *a*_{*2*}*-b/*2 < *t*_{*2*} < *a*_{*2*}+*b/*2 befestigt werden kann.
